Europäisches Patentamt

European Patent Office

Office européen des brevets

(19)

(11) EP 0 845 668 A2

## (12) EUROPÄISCHE PATENTANMELDUNG

(43) Veröffentlichungstag:
03.06.1998 Patentblatt 1998/23

(51) Int. Cl.$^6$: G01N 21/47, G01N 21/25

(21) Anmeldenummer: 98102943.2

(22) Anmeldetag: 20.02.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(71) Anmelder: Wagner, Heinz
8045 Zürich (CH)

(72) Erfinder: Wagner, Heinz
8045 Zürich (CH)

(74) Vertreter:
Troesch Scheidegger Werner AG
Patentanwälte,
Siewerdtstrasse 95,
Postfach
8050 Zürich (CH)

(54) **Verfahren und Einrichtung zur Ueberprüfung mindestens einer Grösse an einem Material**

(57) Um durch Reflexionsmessung von der Oberfläche eines Materials interessierende Materialeigenschaften zu ermitteln, werden gleichzeitig mehrere Lichtbündel ($S_1$, $S_2$ ... $S_n$) auf die gleiche Stelle der Oberfläche (B) gerichtet und reflektiertes Licht (R) ausgewertet. Das Licht der Bündel weist dabei gleiche, bei mehreren Bündeln möglicherweise teilweise gleiche oder aber unterschiedliche Spektren auf. Das reflektierte Licht wird nach Spektrumanalyse an einer Recheneinheit 5 ausgewertet, insbesondere bevorzugt mittels Faktoranalyse.

FIG.1

**Beschreibung**

Die vorliegende Erfindung betrifft ein Verfahren nach dem Oberbegriff von Anspruch 1 sowie Messeinrichtungen nach demjenigen von Anspruch 5 und/oder 6. Im weiteren betrifft sie Verwendungen dieses Verfahrens bzw. dieser Einrichtungen nach den Ansprüchen 10 bzw. 11.

Ein verbreitetes Verfahren zur Erfassung einer Materialeigenschaft, die das spektrale Reflexionsverhalten des Materials beeinflusst, ist die Messung der elektromagnetischen Spektren von Proben und die Auswertung dieser Spektren mittels mathematischer Beziehungen, woraus zu der gesuchten Eigenschaft in eindeutiger Beziehung stehende Signale bzw. Messwerte gewonnen werden. Dabei ist es üblich, die Probe mit einer breitbandigen Strahlungsquelle bzw. Lichtquelle zu bestrahlen und die Transmission und/oder Reflexion der elektromagnetischen Strahlung mit einer geeigneten Optik zu sammeln und einer spektralen Analyseeinheit, insbesondere einem Spektrometer, zuzuführen. Aus den Spektren lassen sich mittels bekannter mathematischer Methoden, wie z.B. nach Beer-Lambert, Kubelka-Munk, Faktoranalyse, partial-least-square-Verfahren etc. von der interessierenden Eigenschaft eindeutig abhängige Grössen bestimmen, sofern ein eindeutiger Zusammenhang zwischen der interessierenden Eigenschaft und den erfassten Spektren besteht. Beispielsweise wird bei der Bestimmung von Konzentrationen von Stoffen in Lösungen nach Beer-Lambert die optische Dichte gemessen. Die optische Dichte ist dabei Funktion der spektral unabhängigen Konzentration und Schichtdicke der Probe und vom spektral abhängigen Extinktions-Koeffizienten.

Da im allgemeinen der spektrale Extinktions-Koeffizient als Material-Kenngrösse ebenso wie die Schichtdicke der Probe bekannt sind, lässt sich aus den Spektren die gesuchte Eigenschaft "Konzentration" ermitteln und damit messen.

Im Gegensatz zu solchen Laborbestimmungen lassen sich in industrieller Umgebung, insbesondere auch bei den on-line-Produktionsüberwachungen, nichtinteressierende, das optische Verhalten des Materials aber mitbeeinflussende Material-Eigenschaften nicht ohne weiteres so beherrschen oder vorab bestimmen, dass sich die Messresultate eindeutig mit den interessierenden Eigenschaften korrelieren lassen. Besondere Schwierigkeiten ergeben sich vor allem aufgrund von Eigenschaften wie Streuung, Beugung und Brechung, partieller Reflexionen sowie Absorption, insbesondere bei inhomogenen, anisotropen Materialien.

Die vorliegende Erfindung geht nun von Erkenntnissen aus, welche sich bei der Messung an Folien in on-line-Produktion ergeben haben, welche Folien aus Glasfaser-verstärkten Harzen gefertigt sind. Soll beispielsweise die Konzentration einer Harzkomponente an der durchlaufenden Folie gemessen werden, so wird ein Vorgehen wie oben beschrieben aufgrund des höchst inhomogenen und anisotropen Materials mit variierender Glasfaserdichte und -verteilung unmöglich.

Eigenschaften, die an unterschiedlichen Orten der Proben variieren, wie Streuung, Brechung, Beugung und partielle Reflexionen, verändern die erfassten Spektren im Bereich ihrer Absorptionsbande spektral unspezifisch, d.h. das erfasste Spektrum variiert in seiner qualitativen spektralen Verteilung kaum, jedoch variiert es quantitativ in seiner absoluten Grösse.

Um Probleme der erwähnten Art zu lösen und störende Eigenschaften, welche das Reflexions- oder Transmissionsspektrum eines Materials zusätzlich zu den interessierenden Eigenschaften beeinflussen, zu eliminieren, ist es bekannt, die Probe aus unterschiedlichen Richtungen, aber mit dem gleichen Spektrum zu bestrahlen und Reflexions- bzw. Transmissionsspektren, entsprechend dem variierenden bzw. modulierten Bestrahlungswinkel, zu analysieren: Bekannte mathematisch-analytische Methoden sind beispielsweise die Streutheorie von Mie (G. Mie, Ann. d. Physik (4), 25 (1908), 377), die Formeln für Lichtbrechung und Reflexion von Fresnel und die Beugungstheorie von Frauenhofer. Gewöhnlich sind aber die zu untersuchenden Proben in ihrer Struktur zu wenig genau bekannt, so dass sich die erwähnten Theorien nicht zur Auswertung anwenden lassen.

Das erwähnte Vorgehen weist den wesentlichen Nachteil auf, dass der Bestrahlungswinkel präzise variiert werden muss, was insbesondere unter Produktionsbedingungen höchst aufwendig ist. Sollen zudem on-line-Messungen vorgenommen werden, bei unter einer Messeinrichtung durchlaufendem Material, so ergibt sich aufgrund der zeitlichen Verstellung des Bestrahlungswinkels der weitere gravierende Nachteil, dass bei den unterschiedlich erstellten Winkeln auch jeweils unterschiedliche Bereiche des auszumessenden Materials erfasst werden. Unter Berücksichtigung der erwähnten Störeigenschaft, die sehr wohl lokal entlang des Materials variieren können, ist das letzterwähnte Vorgehen für on-line-Messungen praktisch nicht einsetzbar.

Es ist Aufgabe der vorliegenden Erfindung, ein Verfahren bzw. eine Einrichtung eingangs genannter Art zu schaffen, um eine interessierende Eigenschaft, die das spektrale Reflexionsverhalten eines Materials beeinflusst, eindeutig zu quantifizieren und weitere Eigenschaften, die das erwähnte Reflexionsverhalten ebenfalls beeinflussen, zu eliminieren. Dabei sollen sich Verfahren und Einrichtungen für den Einsatz unter Produktionsbedingungen und insbesondere auch für den on-line-Einsatz während der Produktion eignen, auch für inhomogene und anisotrope Materialien.

Zu diesem Zweck zeichnet sich das eingangs erwähnte Verfahren nach dem Kennzeichen von Anspruch 1 aus, in zwei Alternativen, die durchaus kombinierbar sind, und entsprechend die erfindungsgemässe Messeinrichtung nach einem der Ansprüche 5 und/oder 6. Bevorzugte Ausführungsvarianten von Verfahren und Einrichtungen sind in den abhängigen Ansprüchen spezifiziert.

Es wurde erfindungsgemäss erkannt, dass, anstelle einer zeitlichen Winkelmodulation des Bestrahlungswinkels bei Reflexionsmessungen, mehrere stationäre Sendestrahlen auf einen Materialbereich gerichtet werden können, welche Strahlen gleiche und/oder unterschiedliche Spektren aufweisen, und dass aus der Erfassung reflektierter Strahlung, Kenntnis der erwähnten unterschiedlichen Spektren, durch spektrale Analyse und anschliessende rechnerische Auswertung, beispielsweise und vorzugsweise mittels Faktoranalyse, eine ausgewählte, vorzugsweise bestimmte Eigenschaft des Materials eindeutig quantifizierbar ist. Als Alternative dazu ist es auch durchaus möglich, den Materialoberflächenbereich aus einer Richtung zu bestrahlen und zeitgleich, spektral in vorgegebener Art und Weise unterschiedlich moduliert, die Reflexion in unterschiedliche Richtungen bezüglich des erwähnten Materialbereichs spektral und rechnerisch auszuwerten.

Bevorzugterweise wird für die rechnerische Auswertung eine Faktoranalyse vorgenommen, wozu auf die EP-A-600 334 (Anmelde-Nr.: 93 118 729.8-2204) verwiesen sei, die bezüglich Bearbeitung einer solchen Faktoranalyse als integrierter Bestandteil der vorliegenden Beschreibung gelten soll.

Bei Bestrahlung des Materialoberflächenbereiches aus unterschiedlichen, zeitlich stationären Richtungen werden die unterschiedlichen Spektren und/oder auch mindestens teilweise gleichen Spektren der Bestrahlungen vorzugsweise mittels spektral unterschiedlicher und/oder gleicher Transmissionsfilter erstellt und dabei weiter, bevorzugterweise, die Bestrahlungs-Strahlen von einer zentralen Beleuchtungsquelle ausgehend durch Strahlteilung realisiert.

Bei alternativen Vorgehen, nämlich Erfassung der Reflexion unter vorgegebenen, zeitlich stationären, unterschiedlichen Winkeln, wird weiter vorgeschlagen, dass die Reflexion mittels unterschiedlich und/oder mindestens teilweise gleich spektral wirkender Transmissionsfilter je in den unterschiedlich ausgerichteten Empfangsstrahlenpfaden moduliert wird und vorzugsweise die Empfangsstrahlenpfade optisch vereint der spektralen Analyse zugeführt werden.

Um im weiteren quantitativ Aussagen über die interessierende Eigenschaft machen zu können, wird vorzugsweise an der Auswerterecheneinheit im Sinne einer Eichung der Wert der interessierenden Eigenschaft aufgenommen, an einem oder mehreren Normmaterialproben abgespeichert und zur Skalierung der gemessenen Werte eingesetzt.

Die Erfindung wird anschliessend beispielsweise anhand von Figuren erläutert. Es zeigen:

Fig. 1   schematisch eine erste Ausführungsform einer erfindungsgemässen Messeinrichtung, die nach dem erfindungsgemässen Verfahren arbeitet,

Fig. 2   in einer Darstellung analog zu derjenigen von Fig. 1, eine zweite Ausführungsform des erfindungsgemässen Verfahrens bzw. einer erfindungsgemässen Einrichtung,

Fig. 3   ausgehend von einem Verfahren bzw. einer Anordnung nach Fig. 1, eine bevorzugte Ausführungsform in analoger Darstellung, und

Fig. 4   ausgehend von der Ausführungsform gemäss Fig. 2 des erfindungsgemässen Verfahrens bzw. der erfindungsgemässen Einrichtung, eine bevorzugte Ausführungsform, wiederum schematisch dargestellt.

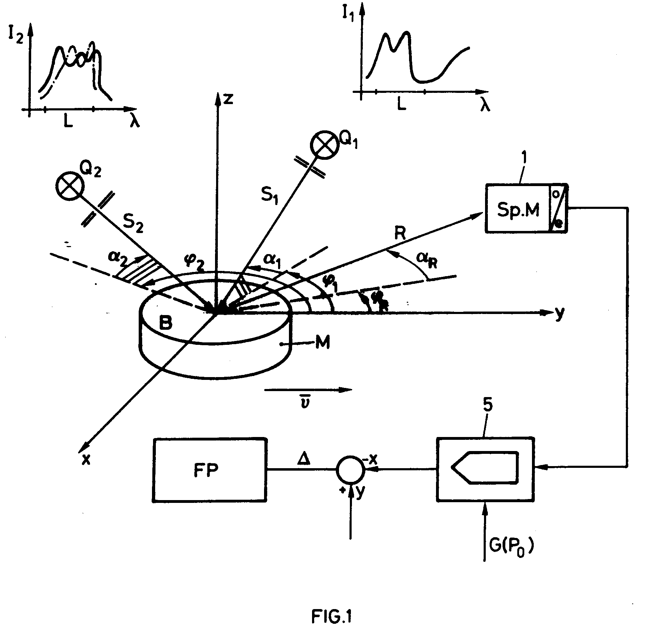

Gemäss Fig. 1 wird erfindungsgemäss einem Bestrahlungsbereich B einer Oberfläche des zu untersuchenden Materials M mittels mindestens zweier, vorzugsweise mehrerer, Strahlen $S_1$, $S_2$, ...$S_n$ elektromagnetischer Strahlung, vorzugsweise Licht, unter vorgegebenen Winkeln $(\alpha_1/\varphi_1)$ bzw. $(\alpha_2/\varphi_2)$... $(\alpha_n/\varphi_n)$ zugeführt. Das Licht der Strahlen $S_1$ bzw. $S_2$ kann, wie mit $I_1(\lambda)$, $I_2(\lambda)$ dargestellt, unterschiedliche Spektren $I_n$ aufweisen, vorzugsweise innerhalb derselben betrachteten spektralen Bänder L, kann aber auch gegebenenfalls mindestens für einen Teil der Strahlen gleich sein.

In einer weiteren vorgegebenen Richtung, entsprechend den Winkeln $(\alpha_R/\varphi_R)$, wird die reflektierte Strahlung R erfasst und, wie bei 1 schematisch dargestellt, einer Spektrum-Analyseeinheit mit opto-elektrischer Wandlung zugeführt, mit nachgeschalteter Auswerterechnereinheit 5. Die Spektren der BestrahlungsStrahlen $S_n$ können beispielsweise durch Strahlungs- bzw. Lichtquellen $Q_n$ vorgegebener Strahlungsspektren $I_n$ erzeugt werden. An der Auswerteeinheit 1, 5 werden die Werte der zu messenden Eigenschaft G, gemessen mittels einer Referenzmethode, an mehreren Normproben $P_o$ eingegeben. Letzteres zur Skalierung der Messwerte. Ausgangsseitig der Auswerteeinheit 1, 5 erscheint ein Signal X(G), welches eindeutig ist bezüglich des Wertes einer vorgegebenen, interessierenden Eigenschaft des Materials M. Bevorzugterweise wird an der Recheneinheit 5 nach der Methode der Faktoranalyse die Auswertung vorgenommen, in völliger Analogie zu der in der EP-A-600 334 ausführlich erläuterten Analysetechnik, welche, wie erwähnt, vollumfänglich bezüglich dieses Vorgehens als integrierter Bestandteil vorliegender Beschreibung erklärt wird.

Dabei werden vorzugsweise, und wie daraus ersichtlich, Spektren $I_n(\lambda)$ eingesetzt, die orthogonale Funktionen zu den Spektren der interessierenden, einflussnehmenden Eigenschaften bilden. Für jede einflussnehmende, nicht interessierende Eigenschaft der Probe muss mindestens ein Strahl $S_n$ mit Spektrum

$I_n(\lambda)$ eingesetzt werden; es können auch gleichzeitig mehrere Strahlen mit gleichen Spektren eingesetzt werden.

Wesentlich ist, dass die Bestrahlungswinkel $(\alpha_1/\varphi_1)$, $(\alpha_2/\varphi_2)$... $(\alpha_n/\varphi_n)$ und die Reflexionserfassungswinkel $(\alpha_R/\varphi_R)$ zeitlich konstant bleiben und die Bestrahlung $S_n$ sowie die Reflexionserfassung R an demselben Oberflächenbereich des Materials M erfolgen. Wie mit dem Pfeil $\overline{v}$ dargestellt, ist es somit möglich, bezüglich der ortsfesten Messeinrichtung eine Materialbahn, wie bei der on-line-Überprüfung während der Produktion, zu bewegen, ohne dadurch die Erfassungsrelevanz mit der erfindungsgemässen Einrichtung bzw. nach dem erfindungsgemässen Verfahren zu stören. Es ist mithin möglich, bei einer solchen on-line-Prüfung das Ausgangssignal X der Auswerteeinheit 1, 5 als gemessener IST-Wert X in regelndem Sinne und, wie schematisch in Fig. 1 dargestellt, mit einem Sollwert entsprechend Y zu vergleichen und, entsprechend der Regeldifferenz $\Delta$, auf den Fertigungsprozess FP einzugreifen.

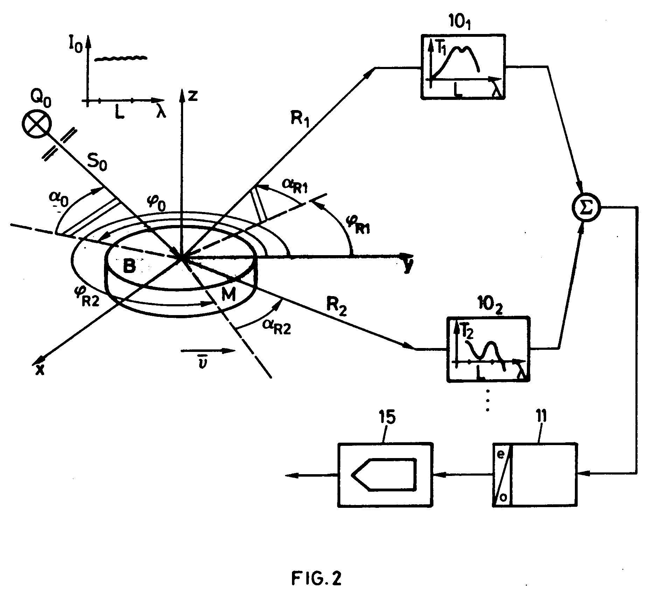

In Fig. 2 ist ein Alternativvorgehen zu demjenigen, das anhand von Fig. 1 erläutert wurde, dargestellt. Es werden lediglich die Unterschiede bezüglich dem Vorgehen nach Fig. 1 erläutert. Die Materialoberfläche wird hier mittels eines Strahles $S_o$ mit in einem betrachteten Spektralbereich L gleichförmigem Spektrum $E_o$ bestrahlt.

In unterschiedlichen, zeitlich stationären Reflexionsrichtungen $(\alpha_{R1}/\varphi_{R1})$, $(\alpha_{R2}/\varphi_{R2})$ $(\alpha_{Rn}/\varphi_{Rn})$ wird reflektierte Strahlung $R_1$ und $R_2$ ... $R_n$ erfasst, mittels Filter $10_1$, $10_2$... $10_n$ unterschiedlich spektral moduliert. Die optischen Ausgangssignale der Filter $10_n$, bevorzugterweise mehr als zwei, werden gemäss Fig. 2 spektral analysiert - 11 - an der Eingangsstufe der Auswerteeinheit 11, 15. Die Auswertereecheneinheit 15 arbeitet in Analogie zur Einheit 5 nach Fig. 1, bevorzugterweise nach der Methode der vorerwähnten Faktoranalyse. Auch in diesem Fall werden als Filterfunktionen der Filter $10_1$ und $10_2$ ... $10_n$ bevorzugterweise orthogonale Funktionen eingesetzt. Auch diese können mindestens teilweise untereinander gleich lang sein oder alle verschieden.

Die Vorgehen nach Fig. 1 und Fig. 2 können durchaus kombiniert werden, d.h. es werden dann:

• mindestens zwei Strahlen $S_{on}$ auf das Material gerichtet, und die Auswertung erfolgt mittels spektral modulierter Strahlen;
• mindestens zwei spektral modulierte Strahlen $S_n$ auf das Material gerichtet, die Auswertung erfolgt mittels mindestens zwei unmodulierten oder spektral ebenfalls modulierten Strahlen.

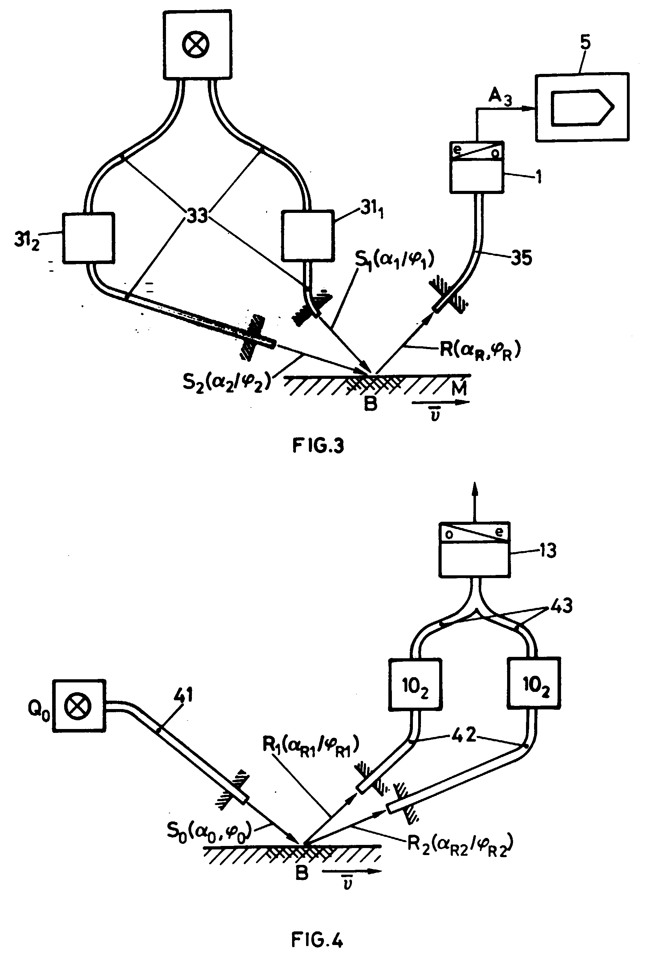

In Fig. 3 ist eine bevorzugte Ausführungsform des anhand von Fig. 1 erläuterten Vorgehens schematisch dargestellt. Die Strahlen $S_1$ und $S_2$ ... $S_n$ werden je über Filter $31_2$ und $31_1$ ... $31_n$ mit unterschiedlichen und/oder gleichen Spektren, insbesondere bevorzugt, wie erwähnt, entsprechend orthogonalen Funktionen, mittels Lichtleitern 33 erzeugt und in den geforderten Winkeln dem Oberflächenbereich B der ggf. an der Messanordnung vorbeilaufenden Materialoberfläche zugeführt. Der Reflexionsstrahl R wird über einen weiteren Lichtleiter 35 erfasst und, wie anhand von Fig. 1 beschrieben wurde, weiter ausgewertet.

In Fig. 4 ist in Analogie zu Fig. 3 eine bevorzugte Ausführungsform des anhand von Fig. 2 erläuterten Vorgehens dargestellt. Der Strahl $S_o$ wird über einen Lichtleiter 41 in gefordertem Winkel dem Bereich B zugeleitet. Die Reflexionsstrahlen $R_1$, $R_2$ ... $R_n$ in den geforderten Winkeln werden durch Lichtleiter 42 aufgenommen, an den Filtereinheiten $10_1$, $10_2$ .. $10_n$ je mit geforderter, gegebener Spektralcharakteristik gefiltert und über weitere Lichtleiter 43 optisch vereint an der Einheit 13, 15 ausgewertet.

Mit dem erfindungsgemässen Verfahren bzw. der entsprechenden erfindungsgemässen Messeinrichtung wird es möglich, eine vorgegebene Grösse an einem Material quantitativ zu erfassen bzw. zu verfolgen, trotz weiterer, das Reflexions-Spektrum mitverändernder Materialgrössen. Insbesondere wird ermöglicht, Materialgrössen an anisotropen, inhomogenen, brechenden und diffus reflektierenden Materialien zu messen, ohne Vorsehen bewegter Messeinrichtungsteile, und ohne dass zeitlich gestaffelt mehrere Messungen vorgenommen werden müssten, die das Verfolgen der erwähnten Grösse an durchlaufenden Materialoberflächen, wie dies bei der on-line-Überwachung notwendig ist, verunmöglichen.

**Patentansprüche**

1. Verfahren zur Erfassung mindestens einer Materialeigenschaft, die das spektrale Reflexionsverhalten eines Materials beeinflusst, wobei am Material mehrere Eigenschaften das erwähnte Reflexionsverhalten beeinflussen, bei welchem Verfahren Reflexion elektromagnetischer Strahlung in unterschiedliche Richtungen von einer Materialoberfläche spektral ausgewertet wird und ein von der quantifizierten Materialeigenschaft abhängiges Resultatsignal ermittelt wird, dadurch gekennzeichnet, dass

- die Materialoberfläche gleichzeitig aus unterschiedlichen Richtungen mit Strahlung gleicher und/oder unterschiedlicher Spektren bestrahlt wird und reflektierte Strahlung einer spektralen Analyse mit rechnerischer Auswertung zugeführt wird,
         und/oder

- die Materialoberfläche aus einer Richtung bestrahlt wird und die Reflexion gleichzeitig aus mehreren Richtungen gleich und/oder unterschiedlich spektral moduliert wird und anschliessend einer spektralen Analyse mit rechnerischer Auswertung zugeführt wird.

2. Verfahren nach Anspruch 1, dadurch gekennzeichnet, dass die unterschiedlichen Spektren der Bestrahlung aus unterschiedlichen Richtungen mittels spektral gleich und/oder unterschiedlich wirkender Filter in vorzugsweise von einer zentralen Beleuchtungsquelle ausgehenden Strahlungspfaden erstellt werden.

3. Verfahren nach Anspruch 1, dadurch gekennzeichnet, dass die Reflexion mittels spektral gleich und/oder unterschiedlich wirkender Filter in unterschiedlich auf die Materialoberfläche gerichteten Empfangsstrahlenpfaden moduliert wird und vorzugsweise die Empfangsstrahlenpfade gemeinsam der spektralen Analyse zugeführt werden.

4. Verfahren nach einem der Ansprüche 1 bis 3, dadurch gekennzeichnet, dass an einer Auswerterecheneinheit mindestens ein an mindestens einer Normprobe des Materials ermittelter Wert als Skalierungswert für das Resultatsignal gespeichert wird.

5. Messeinrichtung zur Ausführung des Verfahrens nach einem der Ansprüche 1 bis 4, dadurch gekennzeichnet, dass sie umfasst:

   - mindestens zwei auf einen gemeinsamen Bereich gerichtete Sendepfade, welche elektromagnetische Strahlen-Bündel mit gleichen oder unterschiedlichen Spektren abgeben,

   - mindestens ein Empfangspfad für elektromagnetische Strahlung, der im wesentlichen auf den erwähnten Bereich gerichtet ist und der mit dem Eingang einer Spektrum-Analyse-Einheit mit einer Auswerterecheneinheit verbunden ist.

6. Messeinrichtung zur Ausführung des Verfahrens nach einem der Ansprüche 1 bis 4, dadurch gekennzeichnet, dass sie umfasst:

   - mindestens einen Sender für ein Strahlenbündel elektromagnetischer Strahlung,

   - mindestens zwei Empfangspfade für elektromagnetische Strahlung, gerichtet im wesentlichen auf einen in der Achse des Sendestrahls liegenden, gemeinsamen Bereich und mit gleicher oder unterschiedlicher spektraler Transmission, wobei die Empfangspfade auf eine spektrale Analyseeinheit geführt sind mit einer Auswerterecheneinheit.

7. Messeinrichtung nach den Ansprüchen 5 und 6.

8. Einrichtung nach Anspruch 5 oder 7, dadurch gekennzeichnet, dass die Sendepfade von einer gemeinsamen Strahlungsquelle ausgehen und je spektral gleiche oder unterschiedliche Transmissionsfilter umfassen.

9. Einrichtung nach Anspruch 6 oder 7, dadurch gekennzeichnet, dass die Empfangspfade spektral gleich oder unterschiedlich wirkende Transmissionsfilter umfassen und gemeinsam auf die spektrale Analyseeinheit geführt sind.

10. Verwendung des Verfahrens nach einem der Ansprüche 1 bis 4 bzw. der Einrichtung nach einem der Ansprüche 5 bis 9 für die Erfassung der Eigenschaft an in-line-produzierten Materialbahnen.

11. Verwendung des Verfahrens nach einem der Ansprüche 1 bis 4 bzw. der Einrichtung nach einem der Ansprüche 5 bis 9 für diffus reflektierende Materialien, insbesondere für inhomogene und anisotrope Materialien.

FIG.1

FIG. 2

FIG.3

FIG.4